# FASCICULE DE BREVET EUROPEEN

(11) **EP 1 077 820 B1**
(45) Date de publication et mention de la délivrance du brevet: **28.05.2003**
(21) Numéro de dépôt: 00903757.3
(22) Date de dépôt: 09.02.2000
(51) Int. Cl.: B60G 15/07

(54) **JAMBE DE FORCE DE SUSPENSION MAC PHERSON ET PROCEDE DE REGLAGE CORRESPONDANT**
FEDERBEIN EINER MACPHERSON-TYP-RADAUFHÄNGUNG UND VERFAHREN ZUR ZUGEHÖRIGEN EINSTELLUNG
MCPHERSON STRUT SUSPENSION CONTROL ROD AND CORRESPONDING ADJUSTING METHOD

(30) Priorité: 19.03.1999 FR 9903426
(43) Date de publication de la demande: 28.02.2001
(73) Titulaire: Compagnie Générale des Etablissement Michelin-Michelin & Cie, 63000 Clermont-Ferrand (FR)
(72) Inventeur: AUBAREDE, Francis, F-63230 Pontgibaud (FR); DUCLOUX, Antoine, F-58260 La Machine (FR)
(74) Mandataire: Abello, Michel
(86) Numéro de dépôt international: FR0000301
(87) Numéro de publication internationale: WO00056560

(56) Documents cités:
- EP-A- 0 780 250
- DE-A- 19 849 991
- US-A- 3 717 354
- US-A- 4 366 969
- US-A- 4 581 802

## Description

L'invention concerne une jambe de force de suspension Mac Pherson, ainsi qu'un procédé de réglage de jambe de force de suspension Mac Pherson.

Une jambe de force de suspension de roue du type Mac Pherson comporte un amortisseur avec un corps et une tige. La tige est entourée par un ressort hélicoïdal. Le ressort hélicoïdal est monté précontraint entre un siège inférieur d'une coupelle inférieure et un siège supérieur d'une coupelle supérieure. La coupelle supérieure est traversée par la tige d'amortisseur, tandis que le corps d'amortisseur est monté solidaire d'un porte-moyeu définissant un axe de rotation de la roue.

Le document EP-0 780 250 A2 concerne le réglage précis d'une jambe de force de suspension Mac Pherson à l'aide de moyens de réglage sur la jambe, en utilisant avantageusement un banc de mesure approprié.

Les figures 18 à 21 de ce document illustrent un réglage agissant par translation de la coupelle inférieure de ressort par rapport à l'axe de la tige d'amortisseur. La coupelle inférieure est posée sur une collerette solidaire du corps d'amortisseur ; cette collerette forme une glissière guidant ladite coupelle en translation dans un plan coupant l'axe de l'amortisseur. Une denture est réalisée sur deux bords parallèles et opposés de la collerette formant glissière, pour assurer à la fois le guidage en translation de la coupelle inférieure et permettre l'immobilisation dans la position relative par la denture elle-même.

Dans la réalisation proposée, il n'est pas possible de modifier le réglage sans détendre au préalable le ressort précontraint. En effet, pour modifier ce réglage, il faut soulever la coupelle inférieure pour la dégager des dentures, et la reposer dans une autre position choisie. Ceci n'est réalisable que si l'on annule préalablement la poussée que le ressort exerce sur cette coupelle, soit en le comprimant davantage au moyen d'un outillage approprié rapprochant les spires intermédiaires, soit en le détendant complètement au cours d'un démontage complet de la jambe.

Ces opérations sont consommatrices de temps, imprécises, et dangereuses en raison d'un risque de brusque détente du ressort hélicoïdal.

Un but de l'invention est de fournir une nouvelle jambe de force de suspension Mac Pherson apte à être réglée en maintenant le ressort précontraint au cours du réglage, de manière à accroître la précision du réglage, en faciliter l'exécution et à supprimer tout risque lors de la mise en oeuvre du réglage.

Ce but est atteint par une jambe de force telle que définie dans la revendication 1.

Un autre but de l'invention est de fournir un procédé de réglage présentant les mêmes avantages.

L'invention a pour objet une jambe de force d'une suspension de roue de type Mac Pherson, comportant un amortisseur avec un corps et une tige ; ladite tige étant entourée par un ressort hélicoïdal ; ledit ressort hélicoïdal étant monté précontraint entre un siège ` inférieur d'une coupelle inférieure et un siège supérieur d'une coupelle supérieure traversée par la tige d'amortisseur ; ledit corps d'amortisseur étant destiné à être monté solidaire d'un porte-moyeu définissant un axe de rotation de la roue, la coupelle inférieure étant montée sur un élément porte-coupelle solidaire du corps d'amortisseur, la jambe comportant des moyens d'indexation pour immobiliser la coupelle inférieure par rapport à l'élément porte-coupelle en une position choisie parmi plusieurs positions relatives possibles, caractérisée par le fait que les moyens d'indexation sont configurés de façon à permettre le passage d'une position relative à une autre position relative en maintenant ledit ressort précontraint entre les coupelles.

De préférence, la jambe de force comporte des moyens de fixation de la coupelle inférieure à l'élément porte-coupelle solidaire du corps d'amortisseur.

Les moyens de fixation sont, avantageusement, des moyens mécaniques de fixation, par exemple du genre : vis, boulon, goupille, rivet ou analogue.

Les moyens d'indexation en translation comprennent, dans une première variante de réalisation, au moins une pluralité de premiers orifices aptes à être mis en correspondance avec au moins un autre second orifice ; la pluralité de premiers orifices est avantageusement réalisée sur la coupelle inférieure, au moins un second orifice est réalisé sur l'élément porte-coupelle solidaire du corps d'amortisseur, en permettant ainsi la fixation de la coupelle à l'élément porte-coupelle dans la position choisie grâce à un moyen de fixation mécanique traversant un premier et second orifice en correspondance.

Dans une deuxième variante de réalisation, les moyens d'indexation en translation comprennent au moins une pluralité de premières conformations aptes à coopérer avec au moins une seconde conformation ; la pluralité de premières conformations peut être réalisée sur l'élément porte-coupelle solidaire du corps d'amortisseur, tandis qu'une seconde conformation au moins est réalisée sur la coupelle inférieure de ressort.

De préférence, les premières et deuxième(s) conformations présentent des surfaces coopérantes arrondies, par exemple partiellement cylindriques ou sphériques.

Dans une troisième variante de réalisation, les moyens d'indexation comprennent une languette élastique d'encliquetage et au moins une encoche d'indexation apte à coopérer avec ladite languette élastique.

Selon un mode de réalisation de cette troisième variante, l'élément porte-coupelle solidaire du corps d'amortisseur comporte une conformation élastique mâle et la coupelle inférieure comporte une conformation femelle apte à être indexée par ladite conformation élastique mâle.

Selon un autre mode de réalisation de cette troisième variante, l'élément porte-coupelle solidaire du corps d'amortisseur comporte une conformation femelle apte à être indexée par une conformation élastique mâle solidaire de la coupelle inférieure.

L'invention a également pour objet un procédé de réglage d'une jambe de force de suspension Mac Pherson comportant l'étape suivante : exercer une poussée sur la coupelle inférieure en prenant appui sur cet élément porte-coupelle pour déplacer la coupelle par rapport à l'élément porte-coupelle d'une position indexée à une autre position tout en maintenant le ressort précontraint entre les coupelles.

Pour le réglage de la troisième variante de réalisation de jambe de force, on dégage préalablement des moyens élastiques d'encliquetage relatif entre la coupelle inférieure et son élément porte-coupelle, avant d'exercer ladite poussée sur la coupelle inférieure en vue de la déplacer.

Selon une mise en oeuvre avantageuse, on déplace la coupelle inférieure et l'élément solidaire du corps d'amortisseur l'une par rapport à l'autre à l'aide d'un moyen mécanique multiplicateur de force : on pourra par exemple utiliser un levier de rapprochement tel qu'une pince ou un levier d'écartement tel qu'un tournevis, un moyen de vissage ou autre moyen analogue multiplicateur de force.

L'invention sera mieux comprise grâce à la description qui va suivre, donnée à titre d'exemple non limitatif, en référence aux dessins annexés, dans lesquels :
- la figure 1 représente schématiquement une vue en perspective partielle éclatée dans le sens de la flèche I de la figure 2 d'un premier mode de réalisation de l'invention ;
- la figure 2 représente schématiquement une vue en perspective partielle éclatée dans le sens de la flèche II de la figure 1 d'un premier mode de réalisation de l'invention ;
- la figure 3 représente schématiquement une vue en perspective partielle assemblée dans le sens de la flèche III de la figure 4 d'un deuxième mode de réalisation de l'invention ;
- la figure 4 représente schématiquement une vue en coupe selon la ligne IV-IV de la figure 3 du deuxième mode de réalisation de l'invention ;
- la figure 5 représente schématiquement une vue en perspective éclatée d'un troisième mode de réalisation de l'invention ;
- les figures 6 et 7 représentent schématiquement des vues en section partielle selon les lignes VI-VI et VII-VII de la figure 5 du troisième mode de réalisation de l'invention dans deux positions d'indexation différentes ;
- la figure 8 représente schématiquement une vue en perspective partielle éclatée d'un quatrième mode de réalisation de l'invention ;
- la figure 9 représente schématiquement une vue en perspective partielle éclatée d'un cinquième mode de réalisation de l'invention ;
- la figure 10 représente schématiquement une vue partielle en perspective assemblée du mode de réalisation de la figure 9 ;
- la figure 11 représente schématiquement une vue en section selon la ligne IX-IX de la figure 10 ;
- la figure 12 représente schématiquement une vue partielle en perspective assemblée d'un sixième mode de réalisation de l'invention ;
- la figure 13 représente schématiquement une vue en section selon la ligne XIII-XIII de la figure 12 du sixième mode de réalisation de l'invention ;
- les figures 14 à 16 illustrent des variantes d'une étape de procédé de réglage selon l'invention.

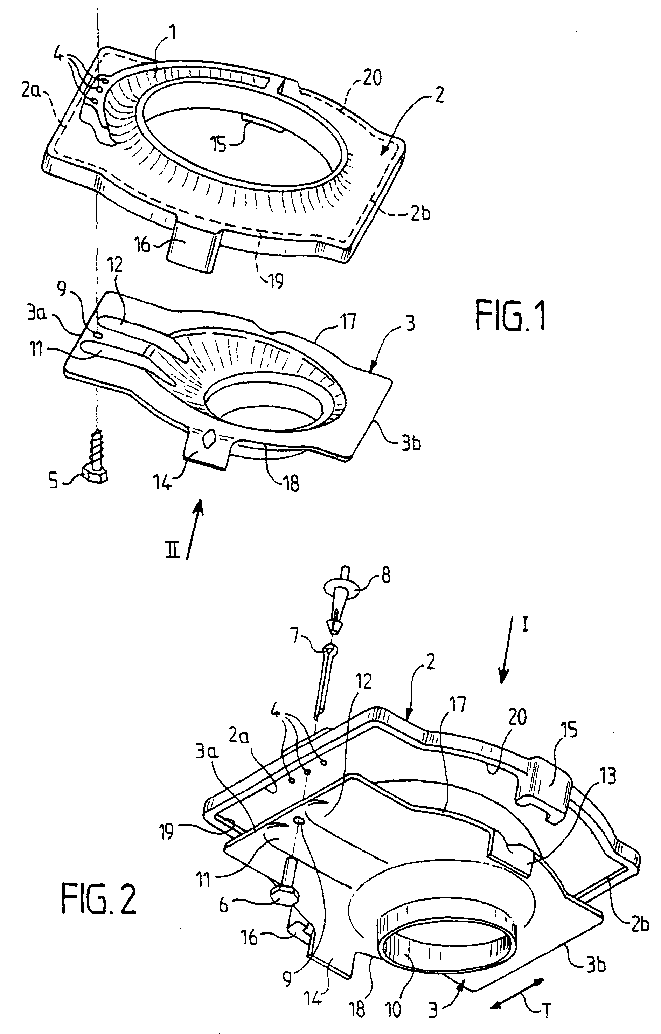

En référence aux figures 1 et 2, une première jambe de force d'une suspension Mac Pherson selon l'invention comporte un amortisseur non représenté avec un corps et une tige. La tige non représentée est entourée par un ressort hélicoïdal qui est monté précontraint sur un siège 1 d'une coupelle inférieure 2. Le corps d'amortisseur non représenté est solidaire d'un élément 3. L'élément 3 présente deux bords opposés 3a, 3b aptes à se déplacer en translation dans le sens de la flèche T en étant guidés par des rebords 2a, 2b de la coupelle inférieure 2.

La coupelle inférieure 2 comporte trois orifices 4 aptes à permettre le passage d'une vis 5, d'un boulon 6, d'une goupille 7 ou d'un rivet 8 pour assurer simultanément l'indexation en position par rapport à un orifice 9 de l'élément 3 et la fixation de la coupelle inférieure 2 à l'élément 3 dans la position d'indexation choisie.

L'élément 3 est solidaire du corps d'amortisseur monté dans le passage 10 et est avantageusement rigidifié par deux nervures 11, 12 de renfort situées de part et d'autre de l'orifice 9.

Des pattes latérales 13 et 14 sont prévues sur l'élément 3 pour fournir un appui permettant de déplacer la coupelle inférieure 2 en translation sur l'élément 3, malgré la pression de frottement engendrée par la poussée du ressort précontraint, non représenté, devant être placé sur le siège inférieur 1. L'appui sur les pattes 13 et 14 permet d'agir par effet de levier sur des conformations 15 et 16 de la coupelle inférieure 2. Cette action parallèle à la direction T de translation fournit un réglage précis de la position du ressort hélicoïdal précontraint par rapport à l'axe de l'amortisseur.

De préférence, les contours latéraux 17 et 18 de l'élément 3 sont contenus à l'intérieur des contours latéraux 19 et 20 de la coupelle inférieure 2, et sont conformés de manière à buter contre celle-ci dans des positions extrêmes de translation dans lesquelles les pattes 13 et 15 ou 14 et 16 arrivent en contact.

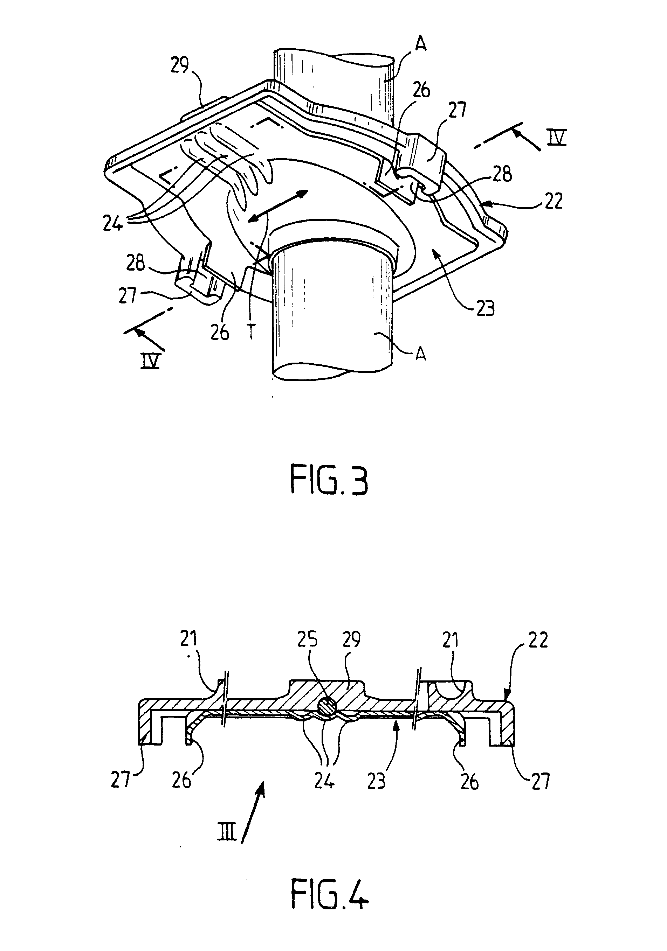

En référence aux figures 3 et 4, un deuxième mode de réalisation de l'invention comporte un amortisseur A dont le corps est entouré en partie supérieure par un ressort hélicoïdal précontraint, non représenté, devant être monté sur un siège 21 d'une coupelle inférieure 22.

Un élément 23 solidaire du corps est monté avec liberté de translation à l'intérieur du contour de la coupelle inférieure 22.

L'élément 23 comporte trois conformations ondulées 24 de forme arrondie, par exemple partiellement cylindrique. Les conformations 24 ondulées peuvent être indexées par une bille 25 ou surface partiellement cylindrique ou sphérique analogue apte à retenir en position une conformation 24 choisie, contre laquelle la bille 25 est appliquée du fait de la poussée du ressort précontraint monté sur le siège 21. La bille 25 ou surface partiellement cylindrique ou sphérique analogue est, de préférence, montée prisonnière sous la coupelle inférieure 22. Des pattes d'appui 26 sont disposées sur l'élément 23 pour coopérer avec des extensions 27 de la coupelle inférieure en vue de permettre l'écartement ou le rapprochement des pattes 26 et des extensions 27 au moyen d'un outil multiplicateur de force ou d'un moyen de vissage approprié. Lorsqu'une patte 26 est au contact d'une extension 27, on peut, par exemple, introduire un tournevis dans l'espace 28 formé par le contour en U d'une extension 27 pour écarter la patte 26 de l'extension 27. Inversement, on peut rapprocher une patte 26 d'une extension 27 à l'aide d'une pince ou levier analogue de rapprochement.

Un rebord 29 de la coupelle inférieure 22 assure à la fois une fonction de renfort et de rigidification de la coupelle inférieure 22 et procure une butée de positionnement et de centrage du ressort hélicoïdal précontraint lorsqu'il est monté sur son siège 21.

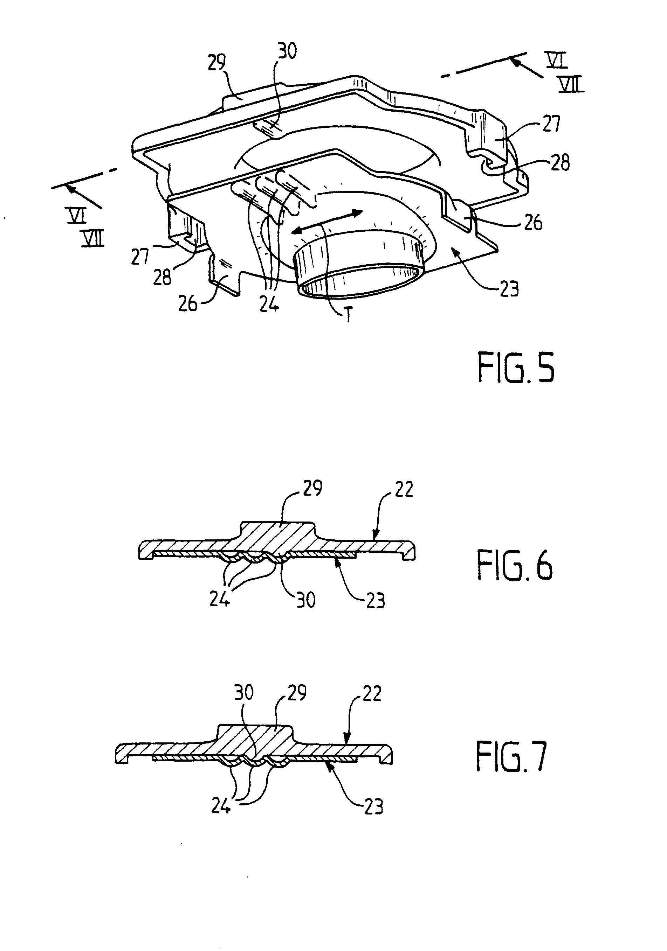

En référence aux figures 5 à 7, un troisième mode de réalisation de l'invention comporte des éléments identiques ou fonctionnellement équivalents aux éléments des figures 3 et 4, repérés par des chiffres de référence identiques aux chiffres des figures 3 et 4.

Dans ce mode de réalisation, la bille 25 ou surface partiellement cylindrique ou sphérique analogue est remplacée par une protubérance cylindrique 30 venant de matière avec la coupelle inférieure 22.

Du fait que l'élément 23 est fabriqué dans une matière résistante à la poussée du ressort précontraint, par exemple en acier, et du fait que la coupelle inférieure 22 est soutenue par cet élément 23, il est possible de réaliser la coupelle inférieure 22 en un matériau injectable, éventuellement une matière plastique de résistance suffisante à la compression.

Le réglage de ce mode de réalisation de l'invention par indexation de la protubérance 30 coopérant avec une ondulation 24 de la pluralité d'ondulations est effectué simplement par rapprochement ou par écartement relatif d'une extension 27 et d'une patte 26 à l'aide d'un moyen mécanique approprié.

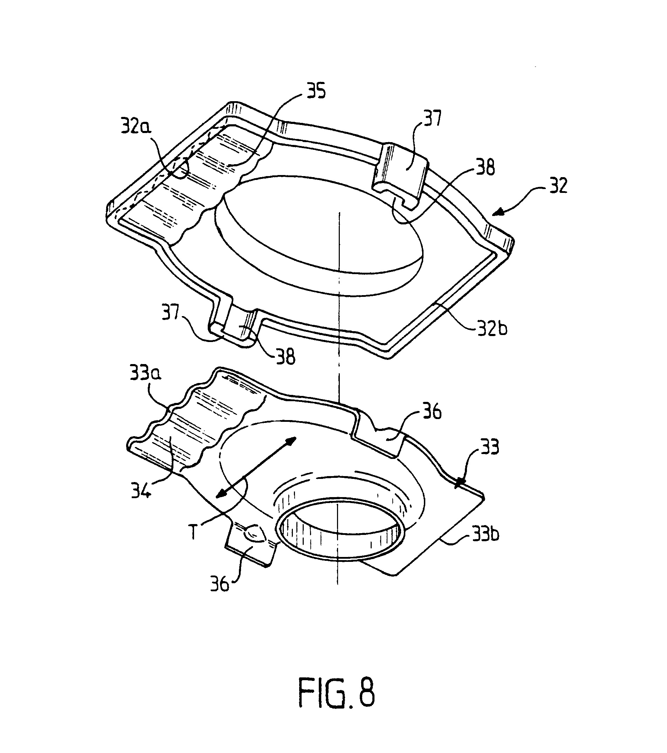

En référence à la figure 8, un autre mode de réalisation de l'invention comporte une coupelle inférieure 32 apte à recevoir un élément 33 solidaire d'un corps d'amortisseur non représenté. La coupelle inférieure 32 reçoit un ressort précontraint monté en compression.

L'élément 33 comporte une pluralité 34 d'ondulations aptes à coopérer avec une pluralité d'ondulations 35 réalisées sous la face inférieure de la coupelle inférieure 32. Des pattes 36 d'élément 33 permettent un rapprochement ou un écartement avec des extensions 37 à section en forme de U présentant un espace entre les branches du U. Cet espace 38 est propre à recevoir un moyen d'écartement, tel qu'un tournevis ou levier analogue.

Du fait que le contour de l'élément 33 reste intérieur au contour inférieur de la coupelle 32, en étant guidé par ses bords extrêmes 33a, 33b sur l'intérieur des rebords 32a, 32b, un déplacement en translation dans la direction T est obtenu simplement, en vue de permettre une indexation à une position choisie pour positionner la coupelle inférieure 32 sur l'élément 33, afin de régler l'angle entre l'axe du ressort hélicoïdal et l'axe de l'amortisseur, non représentés.

Les modes de réalisation décrits en référence aux figures 3 à 8 présentent tous l'avantage d'une rigidification de l'élément 23 ou 33 solidaire du corps de l'amortisseur, grâce aux ondulations d'indexation 24 ou 34 qui assurent par elles-mêmes une fonction de rigidification et de résistance à la flexion sous la poussée du ressort précontraint non représenté. Ces ondulations permettent ainsi de ne pas réaliser des nervures similaires aux nervures 11 et 12 de rigidification de la figure 1.

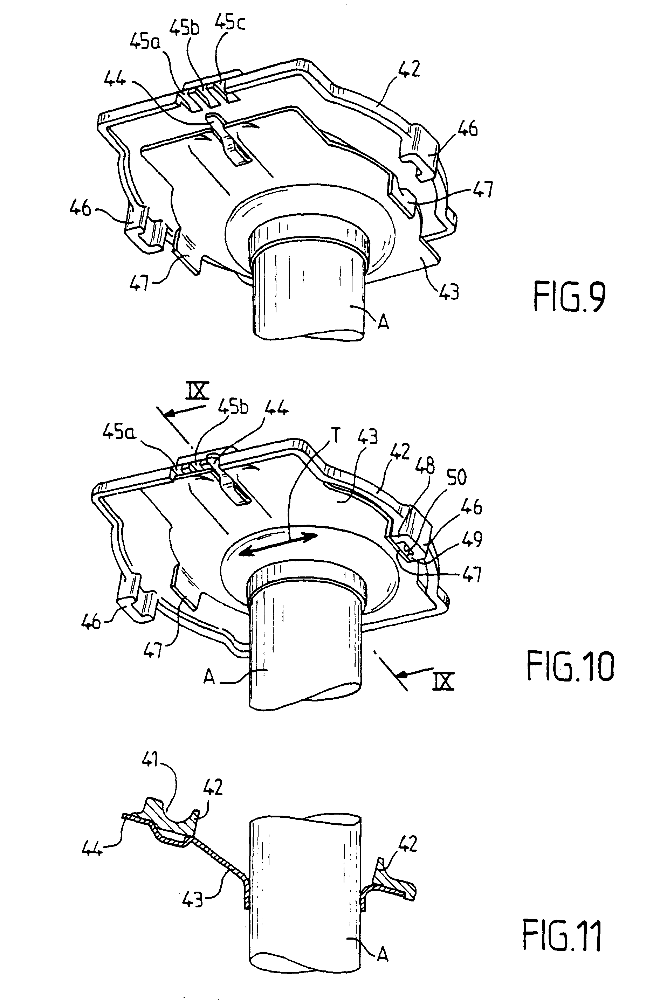

En référence aux figures 9 à 11, une jambe de force de suspension de roue de type Mac Pherson comporte un amortisseur avec un corps A et une tige non représentée. La tige d'amortisseur est entourée par un ressort hélicoïdal non représenté, lequel est monté précontraint entre une coupelle inférieure 42 et une coupelle supérieure non représentée. La coupelle inférieure 42 présente un contour avec des bords relevés aptes à recevoir un élément 43 solidaire du corps A d'amortisseur. Le contour de l'élément 43 solidaire du corps A d'amortisseur s'inscrit de préférence à l'intérieur du contour des bords relevés de la coupelle inférieure 42, à l'exception d'une languette élastique 44 disposée sur un des bords de l'élément 43 aptes à coulisser en translation dans le sens de la flèche T par rapport à la coupelle inférieure 42.

La coupelle inférieure 42 peut ainsi se déplacer en translation dans le sens de la flèche T par rapport à l'élément 43 qu'elle coiffe. Cette possibilité de déplacement en translation permet de choisir une position relative d'immobilisation, dans laquelle l'indexation relative est obtenue par encliquetage de la languette élastique 44 dans une des encoches 45a à 45c. Sur la figure 10, la languette élastique 44 est, par exemple, encliquetée dans l'encoche 45c.

Pour passer de la position de la figure 10 à une autre position relative choisie d'immobilisation, il suffit de dégager la languette élastique 44 et de la maintenir en position dégagée tout en déplaçant la coupelle inférieure 42 par rapport à l'élément 43 en translation dans le sens de la flèche T.

Seul l'élément 43 solidaire du corps A d'amortisseur est nécessairement fabriqué dans une matière résistante à la poussée du ressort précontraint, par exemple en acier : la coupelle inférieure 42 prise entre l'élément 43 et le ressort hélicoïdal précontraint non représenté est simplement soumise à un effort de compression et peut, par conséquent, être fabriquée en tout matériau présentant une résistance suffisante, même en un matériau synthétique de résistance suffisante.

De préférence, l'élément 43 et la coupelle inférieure 42 portent des conformations d'appui 46 et 47 espacées entre elles dans le sens de la flèche T.

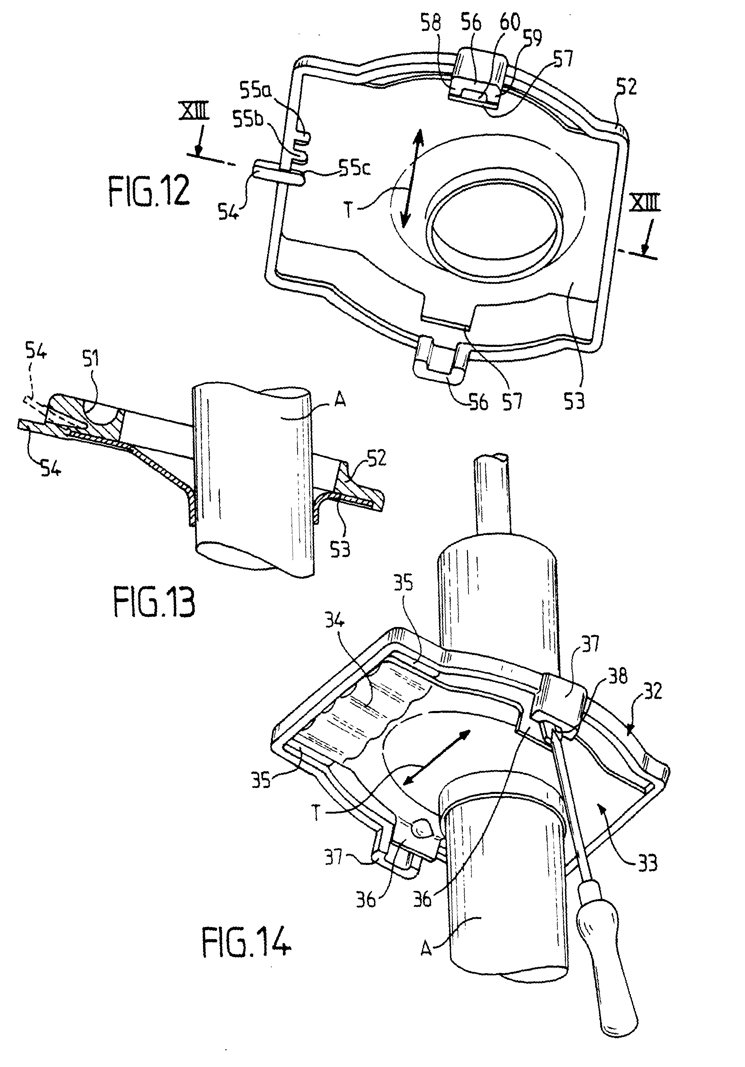

En référence aux figures 12 et 13, une autre jambe de force selon l'invention comporte un corps A d'amortisseur, une coupelle inférieure 52, un élément 53 solidaire du corps A d'amortisseur et des moyens d'indexation élastiques entre l'élément 53 et la coupelle inférieure 52 présentant un siège inférieur d'un ressort hélicoïdal monté précontraint et non représenté. La coupelle inférieure 52 porte une languette 54 articulée élastiquement sur la coupelle inférieure 52; tandis que l'élément 53 porte des encoches 55a, 55b, 55c aptes à recevoir la languette 54 d'indexation.

De préférence, le contour de l'élément 53 s'inscrit à l'intérieur du contour des bords relevés de la coupelle inférieure 52, une liberté de translation selon la flèche T étant prévue pour permettre le déplacement de l'une à l'autre d'une position choisie d'immobilisation correspondant à l'indexation par l'une des encoches 55a à 55c de la languette élastique 54.

Des conformations d'appui espacées 56, 57 sont avantageusement prévues, sur la coupelle inférieure 52 et sur l'élément 53, pour faciliter le déplacement relatif en translation dans le sens de la flèche T après avoir dégagé la languette 54 encliquetable de l'encoche où elle était verrouillée : cette position de dégagement correspond à la position représentée en traits pointillés de la figure 13.

Des nervures de renfort peuvent être prévues dans l'élément 53 pour résister à la poussée du ressort hélicoïdal précontraint non représenté.

En référence aux figures 14 à 16, le procédé de réglage selon l'invention implique d'avoir réalisé un élément solidaire d'un corps d'amortisseur et d'avoir appliqué sur ledit élément une coupelle inférieure de ressort soumise à la poussée du ressort hélicoïdal précontraint.

Ce procédé de réglage décrit en référence au mode de réalisation de la figure 8 peut être appliqué sans difficulté par l'homme du métier aux autres modes de réalisation de l'invention avec éventuellement un déblocage préalable des moyens élastiques 44 ou 54 des modes de réalisation des figures 9 à 11 ou des figures 12 et 13 ou une extraction des moyens d'indexation 5, 6, 7, 8 dans le cas des modes de réalisation des figures 1 et 2.

Le réglage de la jambe de force s'effectue ensuite pour indexer en translation la coupelle inférieure dans une position choisie, tout en maintenant le ressort précontraint au cours de l'indexation.

A cet effet, compte-tenu de la force appliquée par le ressort précontraint, il est nécessaire d'utiliser un moyen multiplicateur de force, car la force humaine ne permet pas de déplacer la coupelle inférieure par rapport à l'élément solidaire du corps d'amortisseur lorsque le ressort est monté précontraint.

De préférence, on utilise un moyen mécanique multiplicateur de force.

Sur la figure 14, on utilise un tournevis à la manière d'un levier écarteur en engageant l'extrémité du tournevis dans l'espace 38 formé par les ailes du contour en U de l'extension 37. Grâce au tournevis, on écarte ainsi la patte 36 de l'extension 37 et on déplace ainsi la coupelle inférieure 32 par rapport à l'élément 33. Ce déplacement en translation dans le sens de la flèche T permet ainsi d'indexer en position une pluralité de conformations ondulées 35 par rapport à une autre pluralité de conformations ondulées 34 réalisées en face inférieure de la coupelle inférieure 32.

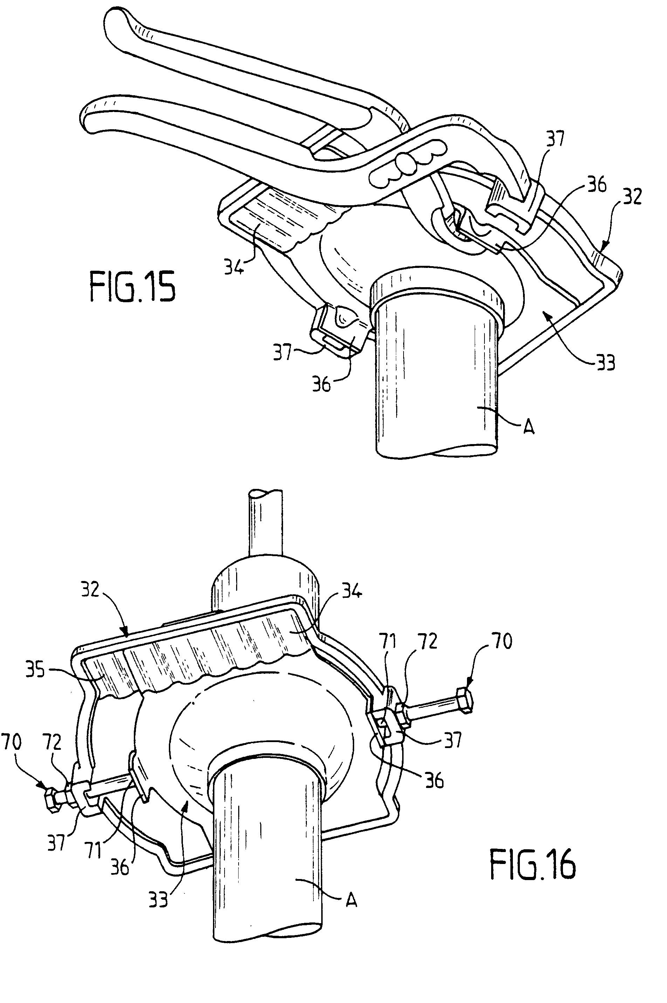

Sur la figure 15, au lieu d'utiliser un tournevis comme levier écarteur, on utilise une pince comme levier de rapprochement. Les becs de la pince agissent sur les faces extérieures opposées d'une extension 37 et d'une patte 36 pour déplacer une coupelle inférieure 32 par rapport à un élément 33 solidaire d'un corps d'amortisseur A. Ce déplacement permet ainsi de faire sauter des ondulations 34 de l'élément 33 par des ondulations coopérantes 35 d'une coupelle inférieure 32 jusqu'à une position choisie correspondant au réglage recherché de l'axe du ressort hélicoïdal par rapport à l'axe de l'amortisseur A.

Sur la figure 16, une autre variante de réalisation de l'invention comporte des moyens de vissage 70 à 72 pour permettre un réglage précis d'une coupelle inférieure 32 par rapport à un élément 33 solidaire d'un corps d'amortisseur A. Au moins une vis 70 est montée sur au moins une extension 37 pour agir et repousser une patte 36 au moyen de l'extrémité 71 d'appui de la vis 70.

Avantageusement, on utilise une vis 70 dont l'extrémité 71 assure un réglage fin, avec un blocage de position au moyen d'un contre écrou 72 pour bloquer le montage mécanique dans une position choisie d'immobilisation.

Dans l'exemple représenté, les vis 70 dépassent de la coupelle inférieure 32 ; cependant, l'invention permet également d'envisager la variante selon laquelle les vis 70 ne dépassent pas de la coupelle inférieure 32, mais sont au contraire montées sur des pattes 36 pour être vissées et dévissées de l'intérieur en prenant appui sur les extensions 37 à l'intérieur du contour en U.

L'invention décrite en référence à plusieurs modes et variantes de réalisation particuliers n'y est nullement limitée, mais couvre au contraire toute modification de forme et toute variante fonctionnelle dans le cadre et l'esprit de l'invention.

Ainsi, au lieu de fabriquer un élément indépendant et de le solidariser ensuite au corps d'amortisseur, on peut prévoir une mise en forme du corps d'amortisseur pour constituer l'élément 3, 23, 33, 43 ou 53 en le faisant venir de matière avec la virole du corps d'amortisseur. Dans cette variante non représentée, le corps d'amortisseur est en quelque sorte gonflé ou déformé localement à l'endroit correspondant audit élément.

## Revendications

1. Jambe de force d'une suspension de roue de type Mac Pherson, comportant un amortisseur (A) avec un corps et une tige ; ladite tige étant entourée par un ressort hélicoïdal ; ledit ressort hélicoïdal étant monté précontraint entre un siège inférieur (1, 21, 41, 51) d'une coupelle inférieure (2, 22, 32, 42, 52) et un siège supérieur d'une coupelle supérieure traversée par la tige d'amortisseur ; ledit corps d'amortisseur (A) étant destiné à être monté solidaire d'un porte-moyeu définissant un axe de rotation de la roue, la coupelle inférieure (2, 22, 32, 42, 52) étant montée sur un élément porte-coupelle (3, 23, 33, 43, 53) solidaire du corps d'amortisseur et formant une glissière apte à garder ladite coupelle inférieure en translation (T) dans un plan coupant l'axe de l'amortisseur (A), la jambe comportant des moyens de fixation pour immobiliser la coupelle inférieure par rapport à l'élément porte-coupelle en une position choisie parmi plusieurs positions relatives possibles et les moyens de fixation (4, 9 ; 24, 25 ; 34, 35) sont configurés de façon que ladite coupelle inférieure (2, 22, 32, 42, 52) est déplaçable en translation (T) d'une position relative à une autre position relative en exerçant sur ladite coupelle inférieure une poussée dans un sens parallèle à la direction de translation (T) en prenant appui sur ledit élément porte-coupelle (3, 23, 33, 43, 53), tout en maintenant ledit ressort précontraint entre les coupelles **caractérisée par le fait que** les moyens de fixation comprennent des moyens d'indexation.

2. Jambe de force selon la revendication 1, **caractérisée par le fait que** la jambe de force comporte des moyens mécaniques de fixation, par exemple du genre : vis (5), boulon (6), goupille (7), rivet (8) ou analogue.

3. Jambe de force selon la revendication 1 ou la revendication 2, **caractérisée par le fait que** lesdits moyens d'indexation (4, 9) en translation (T) comprennent au moins une pluralité de premiers orifices (4) aptes à être mis en correspondance avec au moins un autre second orifice (9).

4. Jambe de force selon la revendication 1, **caractérisée par le fait que** les moyens d'indexation en translation comprennent au moins une pluralité de premières conformations (24, 34) aptes à coopérer avec au moins une seconde conformation (25, 35).

5. Jambe de force selon la revendication 1, **caractérisée par le fait que** les moyens (44, 45 ; 54, 55) d'indexation en translation (T) comprennent une languette (44, 54) élastique d'encliquetage et au moins une encoche (45, 55) d'indexation apte à coopérer avec ladite languette élastique (44, 54).

6. Jambe de force selon la revendication 5, **caractérisée par le fait que** l'élément porte-coupelle (43) solidaire du corps (A) d'amortisseur comporte une conformation élastique mâle (44) et la coupelle inférieure (42) comporte une conformation femelle (45) apte à être indexée par ladite conformation élastique mâle (44).

7. Jambe de force selon l'une quelconque des revendications précédentes, **caractérisée par le fait que** l'élément porte-coupelle (43, 53) solidaire du corps (A) d'amortisseur et la coupelle inférieure (42, 52) portent des conformations d'appui (46, 47 ; 56, 57) espacées pour le réglage dans la position choisie d'immobilisation de la coupelle inférieure (42, 52) par rapport audit élément porte-coupelle (43, 53).

8. Jambe de force selon la revendication 7, **caractérisée par le fait que** les conformations d'appui espacées (46, 56 ou 47, 57) portent des moyens de réglage par vissage (70-72).

9. Procédé de réglage d'une jambe de force de suspension Mac Pherson ; ladite jambe de force comportant un amortisseur (A) avec un corps et une tige ; ladite tige étant entourée par un ressort hélicoïdal ; ledit ressort hélicoïdal étant monté précontraint entre un siège inférieur (1, 21, 41, 51) d'une coupelle inférieure (2, 22, 32, 42, 52) et un siège supérieur d'une coupelle supérieure traversée par la tige d'amortisseur ; ledit corps d'amortisseur (A) étant destiné à être monté solidaire d'un porte-moyeu définissant un axe de rotation de la roue, la coupelle inférieure (2, 22, 32, 42, 52) étant montée sur un élément porte-coupelle (3, 23, 33, 43, 53) solidaire du corps d'amortisseur et formant une glissière apte à guider ladite coupelle inférieure en translation (T) dans un plan coupant l'axe de l'amortisseur (A), la jambe comportant des moyens d'indexation pour immobiliser la coupelle inférieure par rapport à l'élément porte-coupelle en une position choisie parmi plusieurs positions relatives possibles ; ledit procédé comportant l'étape suivante : exercer une poussée sur la coupelle inférieure (2, 22, 32, 42, 52) dans un sens parallèle à la direction de translation (T) en prenant appui sur l' élément porte-coupelle (3, 23, 33, 43, 53) pour déplacer la coupelle (2, 22, 32, 42, 52) par rapport à l'élément porte-coupelle (3, 23, 33, 43, 53) d'une position indexée à une autre position tout en maintenant le ressort précontraint entre les coupelles.

10. Procédé selon la revendication 9, dans lequel on dégage des moyens élastiques (44, 54) d'encliquetage relatif entre la coupelle inférieure (2, 22, 32, 42, 52) et l'élément porte-coupelle (3, 23, 33, 43, 53), avant d'exercer ladite poussée sur la coupelle inférieure (2, 22, 32, 42, 52) en vue de la déplacer.

## Claims

1. Strut for a wheel suspension of the MacPherson type, comprising a shock absorber (A) with a body and a rod; said rod being surrounded by a coil spring; said coil spring being mounted preloaded between a lower seat (1, 21, 41, 51) of a lower spring retainer (2, 22, 32, 42, 52) and an upper seat of an upper spring retainer through which the shock absorber rod passes; said shock absorber body (A) being intended to be mounted secured to a hub carrier defining an axis of rotation of the wheel, the lower spring retainer (2, 22, 32, 42, 52) being mounted on a spring retainer holder (3, 23, 33, 43, 53) secured to the shock absorber body and forming a slide capable of guiding said lower spring retainer in translation (T) in a plane intersecting the axis of the shock absorber (A), the strut comprising indexing means for immobilizing the lower spring retainer with respect to the spring retainer holder in one position chosen among a number of possible relative positions, **characterized in that** the indexing means (4, 9; 24, 25; 34, 35) are configured so that said lower spring retainer (2, 22, 32, 42, 52) is movable in translation (T) from one relative position to another relative position by exerting on said lower spring retainer a thrust in a parallel direction to the direction of translation (T) taking a bearing on said spring retainer holder (3, 23, 33, 43, 53), while keeping said spring preloaded between the spring retainers.

2. Strut according to claim 1, **characterized in that** the strut comprises mechanical fastening means, for example of the screw (5), bolt (6), pin (7), rivet (8) or similar kind.

3. Strut according to claim 1 or 2, **characterized in that** said means (4, 9) of indexing in translation (T) comprise at least a number of first orifices (4) capable of being brought into coincidence with at least another second orifice (9).

4. Strut according to claim 1, **characterized in that** the translational indexing means comprise at least a number of first shapes (24, 34) capable of collaborating with at least one second shape (25, 35).

5. Strut according to claim 1, **characterized in that** the means (44, 45; 54, 55) of indexing in translation (T) comprise a clip-in elastic tab (44, 54) and at least one indexing cutout (45, 55) capable of collaborating with said elastic tab (44, 54).

6. Strut according to claim 5, **characterized in that** the spring retainer holder (43) secured to the shock absorber body (A) comprises a male elastic shape (44) and the lower spring retainer (42) comprises a female shape (45) capable of being indexed by said male elastic shape (44).

7. Strut according to any one of the preceding claims, **characterized in that** the spring retainer holder (43, 53) secured to the shock absorber body (A) and the lower spring retainer (42, 52) carry bearing shapes (46, 47; 56, 57) which are spaced apart for adjusting the lower spring retainer (42, 52) into the chosen position of immobilization with respect to said spring retainer holder (43, 53).

8. Strut according to claim 7, **characterized in that** the spaced-apart bearing shapes (46, 56 or 47, 57) carry screw-adjustment means (70-72).

9. Method for adjusting a MacPherson suspension strut; said strut comprising a shock absorber (A) with a body and a rod; said rod being surrounded by a coil spring; said coil spring being mounted with preload between a lower seat (1, 21, 41, 51) of a lower spring retainer (2, 22, 32, 42, 52) and an upper seat of an upper spring retainer through which the shock absorber rod passes; said shock absorber body (A) being intended to be mounted secured to a hub carrier defining an axis of rotation of the wheel, the lower spring retainer (2, 22, 32, 42, 52) being mounted on a spring retainer holder (3, 23, 33, 43, 53) secured to the shock absorber body and forming a slide capable of guiding said lower spring retainer in translation (T) in a plane intersecting the axis of the shock absorber (A), the strut comprising indexing means for immobilizing the lower spring retainer with respect to the spring retainer holder in one position chosen among a number of possible relative positions; said method comprising the following step: exerting a thrust on the lower spring retainer (2, 22, 32, 42, 52) in a parallelel direction to the direction of translation (T) by taking a bearing on the spring retainer holder (3, 23, 33, 43, 53) to shift the lower spring retainer (2, 22, 32, 42, 52) with respect to the spring retainer holder (3, 23, 33, 43, 53) from one indexed position to another position while keeping the spring preloaded between the spring retainers.

10. Method according to claim 9, in which elastic means (44, 54) that clip the lower spring retainer (2, 22, 32, 42, 52) and the spring retainer holder (3, 23, 33, 43, 53) together are disengaged before said thrust is exerted on the lower spring retainer (2, 22, 32, 42, 52) with a view to shifting it.

## Patentansprüche

1. Federbein für eine McPherson-Radaufhängung, mit einem Dämpfer (A) mit einem Körper und einer Stange; die genannte Stange ist von einer wendelförmigen Feder umgeben; die genannte wendelförmige Feder ist vorgespannt zwischen einem unteren Sitz (1, 21, 41, 51) eines unteren Tellers (2, 22, 32, 42, 52) und einem oberen Sitz eines oberen Tellers montiert, der von der Dämpferstange durchsetzt wird; der genannte Körper des Dämpfers (A) ist dazu bestimmt, fest mit einem Achsträger montiert zu werden, der eine Drehachse des Rades definiert, während der untere Teller (2, 22, 32, 42, 52) auf einem Tellerträgerelement (3, 23, 33, 43, 53) angebracht ist, das fest mit dem Körper des Dämpfers verbunden ist und eine Gleitführung bildet, die dazu eingerichtet ist, den genannten unteren Teller bei der Translationsbewegung (T) in einer Ebene zu führen, die die Achse des Dämpfers (A) schneidet, wobei das Federbein Indexierungsmittel aufweist, um den unteren Teller bezüglich des Tellerträgerelements in einer Lage festzulegen, die unter vielen, möglichen Relativlagen ausgewählt ist, **dadurch gekennzeichnet, daß** die Indexierungsmittel (4, 9; 24, 25; 34, 35) derart ausgebildet sind, daß der genannte untere Teller (2, 22, 32, 42, 52) bei der Translationsbewegung (T) aus einer Relativlage in eine andere Relativlage versetzbar ist, indem man auf den genannten unteren Teller ein Zug in einer Richtung parallel zur Richtung der Translationsbewegung (T) ausgeübt wird, indem sich auf dem genannten Tellerträgerelement (3, 23, 33, 42, 53) abstützt, während man gleichzeitig die genannte Feder zwischen den Tellern vorgespannt läßt.

2. Federbein nach Anspruch 1, **dadurch gekennzeichnet, daß** das Federbein mechanische Befestigungsmittel aufweist, zum Beispiel folgender Art: Schraube (5), Schraubbolzen (6), Splint (7), Niete (8) oder dergleichen.

3. Federbein nach Anspruch 1 oder Anspruch 2, **dadurch gekennzeichnet, daß** die genannten Indexierungsmittel (4, 9) bei der Translationsbewegung (T) mindestens eine Vielzahl erster Öffnungen (4) aufweisen, die dazu eingerichtet sind, mit mindestens einer zweiten Öffnung (9) in Deckung gebracht zu werden.

4. Federbein nach Anspruch 1, **dadurch gekennzeichnet, daß** die Indexierungsmittel bei der Translationsbewegung mindestens eine Vielzahl erster Ausbildungen (24, 34) aufweisen, die dazu eingerichtet sind, mit mindestens einer zweiten Ausbildung (25, 35) zusammenzuwirken.

5. Federbein nach Anspruch 1, **dadurch gekennzeichnet, daß** die Indexierungsmittel (44, 45; 54, 55) bei der Translationsbewegung (T) eine elastische Sperrklinke (44, 54) und mindestens eine Indexierungskerbe (45, 55) aufweisen, die dazu eingerichtet ist, mit der genannten, elastischen Klinke (44, 54) zusammenzuwirken.

6. Federbein nach Anspruch 5, **dadurch gekennzeichnet, daß** das Tellerträgerelement (43), das fest mit dem Körper (A) des Dämpfers verbunden ist, eine elastische Vaterausbildung (44) aufweist und der untere Deckel (42) mindestens eine Mutterausbildung (45) aufweist, die dazu eingerichtet ist, bei der Verstellung durch die genannte, elastische Vaterausbildung (44) positioniert zu werden.

7. Federbein nach irgendeinem der vorangehenden Ansprüche, **dadurch gekennzeichnet, daß** das Tellerträgerelement (43, 53), das fest mit dem Körper (A) des Dämpfers verbunden ist, und der untere Deckel (42, 52) zur Einstellung in der gewählten Festlegungsposition des unteren Tellers (42, 52) bezüglich des genannten Tellerträgerelements (43, 53) beabstandete Auflageausbildungen (46, 47; 56, 57) tragen.

8. Federbein nach Anspruch 7, **dadurch gekennzeichnet, daß** die beabstandeten Auflageausbildungen (46, 56 oder 47, 57) Schraub-Regulierungsmittel (70 - 72) aufweisen.

9. Verfahren zum Einregulieren eines Federbeins einer McPherson-Aufhängung; das genannte Federbein weist einen Dämpfer (A) mit einem Körper und einer Stange auf; die genannte Stange ist von einer wendelförmigen Feder umgeben; die genannte wendelförmige Feder ist vorgespannt zwischen einem unteren Sitz (1, 21, 41, 51) eines unteren Tellers (2, 22, 32, 42, 52) und einem oberen Sitz eines oberen Tellers montiert, der von der Dämpferstange durchsetzt wird; der genannte Körper des Dämpfers (A) ist dazu bestimmt, fest mit einem Achsträger montiert zu werden, der eine Drehachse des Rades definiert, während der untere Teller (2, 22, 32, 42, 52) auf einem Tellerträgerelement (3, 23, 33, 43, 53) angebracht ist, das fest mit dem Körper des Dämpfers verbunden ist und eine Gleitführung bildet, die dazu eingerichtet ist, den genannten unteren Teller bei der Translationsbewegung (T) in einer Ebene zu führen, die die Achse des Dämpfers (A) schneidet, wobei das Federbein Indexierungsmittel aufweist, um den unteren Teller bezüglich des Tellerträgerelements in einer Lage festzulegen, die unter vielen, möglichen Relativlagen ausgewählt ist, und wobei das genannte Verfahren den folgenden Schritt aufweist: Ausüben einer Zugwirkung auf den unteren Teller (2, 22, 32, 42, 52) in einer Richtung parallel zur Richtung der Translationsbewegung (T), indem man sich auf dem Tellerträgerelement (3, 23, 33, 43, 53) abstützt, um den Teller (2, 22, 32, 42, 52) bezüglich des Tellerträgerelements (3, 23, 33, 43, 53) aus einer indexierten Position in einer andere Position zu versetzen, während man gleichzeitig die Feder zwischen den Tellern vorgespannt hält.

10. Verfahren nach Anspruch 9, in dem man elastische Mittel (44, 54) zum relativen Sperren zwischen dem unteren Teller (2, 22, 32, 42, 52) und dem Tellerträgerelement (3, 23, 33, 43, 53) aus dem Eingriff löst, bevor man die genannte Zugwirkung auf den unteren Teller (2, 22, 32, 42, 52) zu dessen Verlagerung ausübt.
